# EUROPÄISCHE PATENTANMELDUNG

(11) **EP 1 275 942 A2**
(43) Veröffentlichungstag der Anmeldung: **15.01.2003**
(21) Anmeldenummer: 02013345.0
(22) Anmeldetag: 19.06.2002
(51) Int. Cl.: G01F 23/00

(54) **Vorrichtung zur stufenlosen Messung der Füllhöhe von Flüssigkeiten in einem Behälter**

(30) Priorität: 14.07.2001 DE 10134307
(71) Anmelder: ITW HENSCHEL GMBH, 29693 HODENHAGEN (DE)
(72) Erfinder: Heldberg, Carsten, 27308 Kirchlinteln-Otersen (DE)
(74) Vertreter: Patentanwälte Hauck, Graalfs, Wehnert, Döring, Siemons, Schildberg

(57) **Zusammenfassung**

Vorrichtung zur stufenlosen Messung von Füllhöhen von Flüssigkeiten in einem Behälter, insbesondere von Kraftstoff in einem Kraftfahrzeugtank, mit den folgenden Merkmalen:
- ein Auftriebskörper im Behälter
- ein Kraftaufnehmer an einer Behälterwand
- ein Widerlager an der gegenüberliegenden Behälterwand, wobei
- der Auftriebskörper zwischen dem Kraftaufnehmer und dem Widerlager in Auftriebsrichtung ausgerichtet und weitgehend bewegungsfrei angeordnet ist und
- eine Auswertevorrichtung für das Signal des Kraftaufnehmers.

## Beschreibung

Die Erfindung bezieht sich auf eine Vorrichtung zur stufenlosen Messung von Füllhöhen von Flüssigkeiten in einem Behälter, insbesondere von Kraftstoff in einem Tank von Automobilen nach dem Patentanspruch 1.

Es sind zahlreiche Vorrichtungen und Verfahren zur Füllstandsmessung von Flüssigkeiten in Behältern bekannt geworden. Beispielsweise kann der Füllstand mit Hilfe eines Schwimmers gemessen werden, dessen Verlagerung über geeignete Hilfsmittel erfaßt wird, beispielsweise über ein Gestänge, über kapazitive oder induktive oder auch akustische Sensoren oder auch durch optische Vorkehrungen. Durch die beschriebenen Sensoren kann auch unmittelbar der Füllstand in einem Behälter erfaßt werden dadurch, daß der Abstand der Flüssigkeitsoberfläche vom Sensor ermittelt wird. Viele Verfahren sind entweder ungenau oder ermöglichen keine stufenlose Messung.

Der Erfindung liegt die Aufgabe zugrunde, eine Vorrichtung zur stufenlosen Messung der Füllhöhe von Flüssigkeiten in Behältern, insbesondere von Kraftstoff in einem Kraftfahrzeugtank, zu schaffen, welcher besonders einfach aufgebaut ist und störungsfrei betrieben werden kann.

Diese Aufgabe wird durch die Merkmale des Anspruchs 1 gelöst.

Bei der erfindungsgemäßen Vorrichtung ist ein Auftriebskörper im Flüssigkeitsbehälter angeordnet. Dieser Auftriebskörper wird jedoch nicht mit der Änderung des Flüssigkeitspegels verstellt, sondern behält seine Lage im wesentlichen bei, welche vorgegeben ist durch ein Widerlager und einen Kraftaufnehmer auf gegenüberliegenden Seiten des Auftriebskörpers. Der Auftriebskörper wird daher im wesentlichen bewegungsfrei gehalten und übt seine Auftriebskraft im wesentlichen in Aufnahmerichtung des Kraftaufnehmers aus. Mithin wird bei der Erfindung die Auftriebskraft in ein Signal umgewandelt, das der Füllhöhe entspricht. Die Auftriebskraft ist dem Volumen der vom Körper verdrängten Flüssigkeit proportional. Wenn sich der Auftriebskörper nicht oder nur sehr wenig bewegen kann, und der Körper eine hinreichend lineare Volumenzunahme in Richtung der Behälteroberseite besitzt, ist die Auftriebskraft direkt proportional der Füllhöhe der Flüssigkeit.

Damit auch kleinere Füllhöhen erfaßt werden können, wird nach einer Ausgestaltung der Erfindung das Eigengewicht des Auftriebskörpers durch eine am Fuß angeordnete Feder ganz oder teilweise kompensiert. Dabei kann bei entsprechender Vorspannung eine kleine Vorspannkraft auf den Kraftaufnehmer ausgeübt werden. Diese Kraft kann in der dem Kraftaufnehmer nachgeschalteten Auswertevorrichtung durch Verschieben des Nullpunktes ausgeblendet werden.

Bei einem sich in seiner Füllhöhe nicht ändernden Querschnitt des Behälters ist der Auftriebskörper ebenfalls vorzugsweise über seine Länge von konstantem Querschnitt. Ändert der Behälter seine Geometrie in der Höhe, ist der Auftriebskörper vorzugsweise entsprechend angepaßt, um eine zum Füllvolumen proportionale Anzeige zu erhalten.

Als Kraftaufnehmer können die verschiedensten Verfahren und Vorrichtungen zur Anwendung kommen. So kann beispielsweise ein Piezosensor vorgesehen werden oder mit Dehnungsmeßstreifen gearbeitet werden. Ferner kann ein kraftabhängiger Widerstand verwendet werden, sowie ein eingespannter Schwinger, dessen Frequenzänderungen in Abhängigkeit vom Füllstand erfaßt werden. Schließlich können auch kapazitive und induktive Verfahren verwendet werden, um die Auftriebskraft des Auftriebskörpers zu messen.

Die erfindungsgemäße Vorrichtung ist insbesondere für elektrisch nicht leitende Flüssigkeiten verwendbar.

Die Erfindung wird nachfolgend anhand eines in einer Zeichnung dargestellten Ausführungsbeispiels näher erläutert.

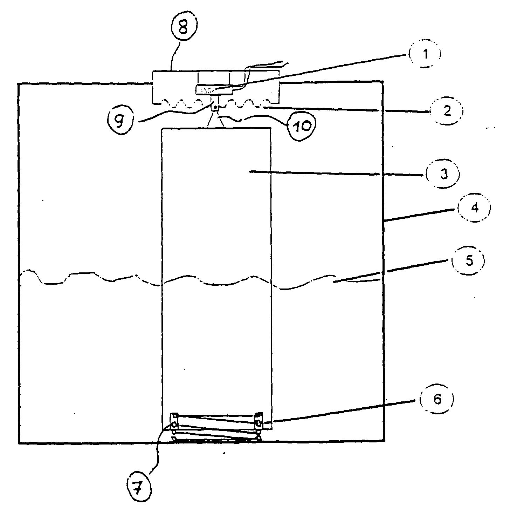

Die einzige Figur zeigt äußerst schematisch eine Vorrichtung nach der Erfindung.

In einem Behälter 4, der in der Zeichnung kastenartig dargestellt ist mit rechteckigem Querschnitt und der beispielsweise den Tank eines Kraftfahrzeugs darstellen soll, ist eine Flüssigkeit 5 befindlich, beispielsweise Kraftstoff. Im Behälter 4 befindet sich ein hohler Auftriebskörper 3, der im vorliegenden Fall über seine Länge gleichen Querschnitt aufweist, beispielsweise ein Zylinder ist. An der Unterseite hat der Auftriebskörper 3 eine ringförmige Nut 7, in die eine Feder 6 eingreift. Mit dem anderen Ende stützt sich die Feder 6 am Boden des Behälters 4 ab.

In der Deckenwand des Behälters 4 ist ein Gehäuse 8 angeordnet, das zum Inneren des Behälters 4 durch eine Membran 2 abgeschlossen ist. In der Membran ist ein Stift 9 angebracht, der im Inneren des Gehäuses 8 auf einen Kraftaufnehmer 1 wirkt, beispielsweise einen Kraftaufnehmer in Form eines Dehnungsmeßstreifens oder eines Piezokristalls. An dem über die Membran 1 in den Behälter 3 hineinstehenden Teil des Stiftes 9 ist ein Lageransatz 10 an der Oberseite des Auftriebskörpers 3 angelenkt.

Die Kraft, welche der Auftriebskörper 3 auf den Kraftaufnehmer 1 ausübt, ist proportional zur Füllhöhe der Flüssigkeit 5. Das Gewicht des Auftriebskörpers 3 wird durch die Feder 6 ganz oder teilweise kompensiert, wobei eine bestimmte Vorspannkraft auf den Kraftaufnehmer 1 ausgeübt werden kann, die dann in der nicht gezeigten Auswertevorrichtung kompensiert werden muß. Das Kraftmeßsignal des Kraftaufnehmers 1 wird auf die nicht gezeigte Auswertevorrichtung geleitet, die über eine Anzeige die Füllstandshöhe oder das Füllvolumen im Behälter 4 anzeigt. Außerdem kann der Meßwert auf einen fahrzeugeigenen Rechner gegeben werden, beispielsweise zur Errechnung der noch verbleibenden Fahrstrecke.

## Patentansprüche

1. Vorrichtung zur stufenlosen Messung von Füllhöhen von Flüssigkeiten in einem Behälter, insbesondere von Kraftstoff in einem Kraftfahrzeugtank, mit den folgenden Merkmalen:
- ein Auftriebskörper (3) im Behälter (4)
- ein Kraftaufnehmer (1) an einer Behälterwand
- ein Widerlager (6) an der gegenüberliegenden Behälterwand, wobei
- der Auftriebskörper (3) zwischen dem Kraftaufnehmer (1) und dem Widerlager (6) in Auftriebsrichtung ausgerichtet und weitgehend bewegungsfrei angeordnet ist und
- eine Auswertevorrichtung für das Signal des Kraftaufnehmers (1).

2. Vorrichtung nach Anspruch 1, **dadurch gekennzeichnet, daß** der Kraftaufnehmer (1) an der oberen und das Widerlager (6) an der unteren Wand des Behälters (4) angeordnet ist.

3. Vorrichtung nach Anspruch 1 oder 2, **dadurch gekennzeichnet, daß** der Auftriebskörper (3) zumindest teilweise hohl ist.

4. Vorrichtung nach einem der Ansprüche 1 bis 3, **dadurch gekennzeichnet, daß** der Auftriebskörper (3) eine an den Behälterhohlraum angepaßte Geometrie aufweist derart, daß die Auftriebskraft annähernd proportional zum Füllvolumen ist.

5. Vorrichtung nach einem der Ansprüche 1 bis 4, **dadurch gekennzeichnet, daß** eine Vorspannkraft auf den Auftriebskörper (3) in Richtung Kraftaufnehmer (1) erzeugt wird.

6. Vorrichtung nach Anspruch 5, **dadurch gekennzeichnet, daß** der Auftriebskörper (3) sich auf einer Feder (6) abstützt.

7. Vorrichtung nach einem der Ansprüche 1 bis 6, **dadurch gekennzeichnet, daß** der Kraftaufnehmer (1) in einem Gehäuse (8) angeordnet ist, das über eine Membran (2) gegenüber dem Behälterinneren abgeschlossen ist und die Membran (2) einen Stift (9) oder dergleichen aufweist, der in den Behälter (4) hineinsteht und mit dem der Auftriebskörper (3) verbunden ist und der Stift (9) mit seinem inneren Ende auf den Kraftaufnehmer (1) wirkt.
